# EUROPÄISCHE PATENTSCHRIFT

(11) **EP 2 650 441 B1**
(45) Veröffentlichungstag und Bekanntmachung des Hinweises auf die Patenterteilung: **18.05.2016**
(21) Anmeldenummer: 13001832.8
(22) Anmeldetag: 09.04.2013
(51) Int. Cl.: E01C 19/48, E01C 19/00, B60Q 1/26

(54) **Selbstfahrende Baumaschine mit Signalisierungseinrichtung**
Self-propelled construction machine having signaling device
Engin automoteur avec dispositif de signalisation

(30) Priorität: 10.04.2012 DE 202012003689 U
(43) Veröffentlichungstag der Anmeldung: 16.10.2013
(73) Patentinhaber: Joseph Vögele AG, 67067 Ludwigshafen (DE)
(72) Erfinder: Herzberg, Ingo, 74918 Angelbachtal (DE)
(74) Vertreter: Grünecker Patent- und Rechtsanwälte PartG mbB

(56) Entgegenhaltungen:
- EP-A1- 0 667 415
- DE-A1-102009 041 842
- DE-U1- 29 609 704
- US-A1- 2002 182 009
- US-A1- 2010 283 598

## Beschreibung

Die Erfindung bezieht sich auf eine selbst fahrende Baumaschine mit einer Signalisierungseinrichtung gemäß dem Oberbegriff des Anspruchs 1, wobei die Baumaschine ein Straßenfertiger oder Beschicker ist.

Aus der Praxis und beispielsweise aus der EP 0 667 415 A1 ist bekannt, dass bestimmte selbstfahrende Baumaschinen, beispielsweise Straßenfertiger oder Beschicker, während des Arbeitseinsatzes mit Material versorgt werden müssen. Dieser als Beschickung bezeichnete Vorgang wird während des Fahrbetriebs durchgeführt, indem beispielsweise ein Lastkraftwagen rückwärts an den gleichzeitig vorwährtsfahrenden Straßenfertiger oder Beschicker heranfährt und das Material von seiner Ladefläche in den Materialbunker des Straßenfertigers oder Beschicker kippt. Während der Beschickung selbst wird der Lastkraftwagen dabei von dem Straßenfertiger oder Beschicker angeschoben. D.h., dass einige aufeinander abgestimmte Fahrmanöver notwendig sind, um die Beschickung zu ermöglichen. Insgesamt erfordert dieser Beschickungsvorgang deshalb ein hohes Maß an Koordination zwischen dem Fahrzeuglenker des Straßenfertigers oder Beschickers und dem Fahrzeuglenker des Lastkraftwagens. Aus diesem Grund schlägt die EP 0 667 415 A1 eine Einrichtung zum Überwachen und Anzeigen von Parametern der Beschickung mit Einbaumaterial vor, die an dem Straßenfertiger oder Beschicker angebracht ist, um dem Fahrzeuglenker des Lastkraftwagens bestimmte Kommandos bzw. Signale bezüglich des Arbeitsvorgangs anzuzeigen. Nachteilig an den bekannten Signalisierungseinrichtungen ist, dass diese aufwendig an dem Straßenfertiger oder Beschicker befestigt werden müssen. Meist werden diese Signalisierungseinrichtungen an Stellen angebracht, die den Sichtbereich des Fahrzeuglenkers des Straßenfertigers oder Beschickers einschränken und damit die Fahrsicherheit negativ beeinflussen.

US 2010/0283598 A1 offenbart einen Straßenfertiger mit einer Signaleinheit, welche insbesondere während eines Befüllvorganges des Straßenfertigers durch ein vorausfahrendes Lastkraftfahrzeug Signale aussendet, um dem Fahrzeuglenker des Straßenfertigers bzw. des vorausfahrenden Lastkraftwagens den Befüllungszustand anzuzeigen.

US 2002/0182009 A1 offenbart einen Einbauzug, umfassend einen Straßenfertiger sowie ein vorausfahrendes Lastkraftfahrzeug zum Befüllen des Materialbunkers des Straßenfertigers. Das vorausfahrende Lastkraftfahrzeug umfasst sowohl einen Speicher für Asphaltbindemittel, als auch Einbaumaterial zum Auffüllen des Materialbunkers des Straßenfertigers.

DE 10 2009 041 842 A1 offenbart eine Straßenfräsmaschine, die auf ein vorausfahrendes Transportfahrzeug, beispielsweise einen Muldenkipper, abgetragenen Straßenbelag schüttet. Die Straßenfräsmaschine verfügt über eine Einrichtung, die dem Fahrzeugführer des Transportfahrzeugs signalisiert, wann er das Transportfahrzeug zum gleichmäßigen Beladen anfahren oder anhalten soll. Diese Anzeigeeinheit hat ein Gehäuse, an welchem optional ein sich verstellbarer Rückspiegel vorgesehen ist.

DE 296 09 704 U1 offenbart einen Straßenfertiger mit einem ein Bedienpult aufweisenden Führerstand oberhalb dessen sich ein Schutzdach befindet, an dessen Halterung Rückspiegel befestigt sind.

Die Aufgabe der vorliegenden Erfindung ist es, eine Baumaschine mit Signalisierungseinrichtung zu schaffen, bei der mit konstruktiv möglichst einfachen Mitteln eine verbesserte Beschickung der Baumaschine erreicht und die Fahrsicherheit der Baumaschine verbessert wird.

Diese Aufgabe wird gelöst durch eine Baumaschine mit den Merkmalen des Anspruchs 1. Vorteilhafte Weiterbildungen der Erfindungen sind in den Unteransprüchen angegeben.

Erfindungsgemäß verfügt die selbstfahrende Baumaschine über wenigstens einen Außenspiegel und eine Signalisierungseinrichtung, die mittels eines gemeinsamen Halters an der Baumaschine befestigt sind, wobei der Halter an einem Fahrerschutzdach der Baumaschine befestigt ist. Diese Anordnung der Signalisierungseinrichtung hat den Vorteil, dass die Rundumsicht für den Fahrzeuglenker besonders im Gefahrenbereich der Baumaschine deutlich verbessert wird, da zusätzlich zu den Außenspiegeln keine weitere, separate und sichtbehindernde Vorrichtung an der Baumaschine befestigt werden muss. Zudem befindet sich der wenigstens eine Außenspiegel gewöhnlicherweise an einer Stelle der Baumaschine, die ideal durch den Fahrzeuglenker des vorausfahrenden Lastkraftwagens eingesehen werden kann, so dass er auch die Anzeige gut ablesen kann. Somit bewirkt die erfindungsgemäße Anordnung der Signalisierungseinrichtung eine optimale Ausnutzung des Bauraums der Baumaschine und eine bessere Ablesbarkeit der Signalisierungseinrichtung während des Beschickungsvorgangs.

Vorzugsweise handelt es sich bei dem Außenspiegel um einen Rückspiegel der Baumaschine, wobei die Signalisierungseinrichtung und der Rückspiegel auf unterschiedlichen Seiten des Halters angeordnet sind. D. h. dass die reflektierende Fläche des Außenspiegels in Fahrtrichtung der Baumaschine nach hinten gerichtet ist, während die Signalisierungseinrichtung in Fahrtrichtung der Baumaschine nach vorne zeigt. Dies ermöglicht es, dass sich die Signalisierungseinrichtung und der Rückspiegel jeweils nicht in der Sicht behindern.

In einer vorteilhaften Ausführungsvariante der Erfindung weist die Signalisierungseinrichtung ein Anzeigefeld auf, das von einem Bedienpult der Baumaschine aus ansteuerbar ist. Da die Rundumsicht des Fahrzeuglenkers der Baumaschine während der Materialbefüllung meist besser ist als die Rundumsicht des Lastkraftwagenfahrers, ist es sinnvoll, wenn der Fahrzeuglenker der Baumaschine die Fahrkommandos zur Anzeige in der Signalisierungseinrichtung vorgibt. Idealerweise weist das Bedienpult hierfür leicht unterscheidbare und verständliche Bedientasten auf, die eine intuitive Auswahl der anzuzeigenden Signale ermöglichen.

Besonders vorteilhaft ist es, wenn das Anzeigefeld wenigstens ein LED-Leuchtfeld aufweist, mit dem unterschiedliche Symbole darstellbar sind. Der Einsatz von LED-Technik ermöglicht dabei eine helle, kontrastreiche Darstellung der Signale und eine gute und zweifelsfreie Lesbarkeit der angezeigten Signale. Die Darstellbarkeit unterschiedlicher Farben erhöht dabei zusätzlich die Verständlichkeit der angezeigten Symbole.

Es ist zweckmäßig, wenn die Signalisierungseinrichtung in Abhängigkeit von Parametern angesteuert wird, die mittels wenigstens eines Sensors der Baumaschine ermittelt werden. So kann beispielsweise über Abstandssensoren der Abstand zwischen der Baumaschine und dem vorausfahrenden Lastkraftwagen ermittelt und die anzuzeigenden Symbole in Abhängigkeit davon ausgewählt werden. Um ein Höchstmaß an Sicherheit zu gewährleisten, können die automatisch erzeugten Symbole jederzeit mittels des Bedienpults manuell verändert verändert bzw. die Sensorik so übersteuert werden.

Der Halter für den wenigstens einen Außenspiegel und die Signalisierungseinrichtung ist an dem Fahrerschutzdach der Baumaschine befestigt, so dass eine optimale Rundumsicht für den Fahrzeuglenker der Baumaschine gegeben ist.

Zweckmäßig ist es, wenn die Ausrichtung des Spiegels und/oder der Signalisierungseinrichtung einstellbar ist. So kann der Außenspiegel in Abhängigkeit der Fahrzeuglenkergröße, dessen Position auf der Baumaschine oder des erwünschten Blickwinkels eingestellt werden. Eine einstellbare Signalisierungseinrichtung erlaubt es, die optimale Ausrichtung für Lastkraftfahrer mit unterschiedlichen Positionen oder Größen vorzunehmen.

Besonders vorteilhaft ist es, wenn jeweils ein Halter für die linke und die rechte Seite der Baumaschine vorgesehen ist und an jedem der Halter eine Signalisierungseinrichtung befestigt ist. Damit wird gewährleistet, dass der Fahrzeuglenker des vorausfahrenden Lastkraftwagens stets wenigstens eine Signalisierungseinrichtung im Blickfeld hat. Beispielsweise können die Signalisierungseinrichtungen so an der Baumaschine ausgerichtet sein, dass der Fahrzeuglenker des Lastkraftwagens jeweils eine Signalisierungseinrichtung in jeweils einem Rückspiegel seines Lastkraftwagens einsehen kann.

Für eine besonders gute Ablesbarkeit der Signalisierungseinrichtung bzw. des Anzeigefelds kann die Signalisierungseinrichtung einen über das Anzeigefeld hervorstehenden Gehäuseteil als Blendschutz aufweisen, der das Anzeigefeld vor Sonneneinstrahlung schützt. Damit wird der Kontrast des Anzeigefelds und zugleich die Ablesbarkeit desselben deutlich verbessert.

Im Folgenden wird ein vorteilhaftes Ausführungsbeispiel der Erfindung anhand einer Zeichnung näher dargestellt. Im Einzelnen zeigen:
- Figur 1: eine schematische Seitenansicht einer erfindungsgemäßen selbstfahrenden Baumaschine und einer der Baumaschine vorausfahrenden, externen Versorgungseinheit,
- Figur 2: eine perspektivische Ansicht einer an einem erfindungsgemäßen Halter befestigten Signalisierungseinrichtung,
- Figur 3: eine perspektivische Ansicht eines erfindungsgemäß an einem gemeinsamen Halter angeordneten Rückspiegels und einer an dem Halter angeordneten Signalisierungseinrichtung,
- Figur 4: eine perspektivische Vorderansicht von zwei erfindungsgemäßen Haltern mit jeweils einem Rückspiegel und jeweils einer Signalisierungseinrichtung, die an einem Fahrerschutzdach einer selbstfahrenden Baumaschine angeordnet sind,
- Figur 5: die erfindungsgemäße Anordnung der zwei Halter aus Figur 4 in einer perspektivischen Rückansicht,
- Figur 6: eine schematische Darstellung einer Ausführungsform eines Bedienpults für eine an einer Baumaschine angeordnete Signalisierungseinrichtung, und
- Figur 7: eine perspektivische Ansicht einer alternativen Möglichkeit zur Befestigung des erfindungsgemäßen Halters mit Rückspiegel an einer Baumaschine.

Gleiche Komponenten sind in den Figuren durchgängig mit gleichen Bezugszeichen versehen.

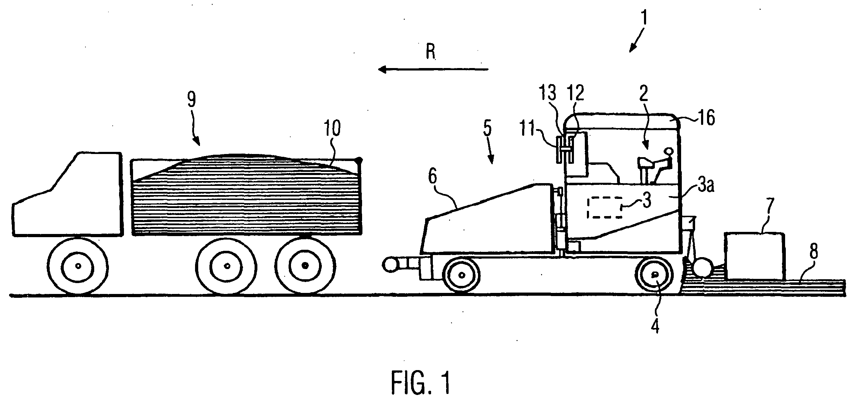

Figur 1 zeigt eine schematische Seitenansicht einer selbstfahrenden Baumaschine 1, bei dem es sich in diesem Ausführungsbeispiel um einen schematisierten Straßenfertiger handelt.

Der Straßenfertiger 1 weist einen Bedienstand 2 auf, von dem aus der Straßenfertiger 1 durch einen Fahrzeuglenker gesteuert wird. Zum Fahrantrieb verfügt der Straßenfertiger 1 über einen Antrieb 3, beispielsweise einen Dieselmotor. Dieser ist unter einer Abdeckung 3a angeordnet und treibt wenigstens eine Achse 4 des Straßenfertigers an. Zur Aufnahme eines Vorrats von Einbaumaterial verfügt der Straßenfertiger 1 über einen Materialbunker 5, der eine zumindest teilweise nach oben offene Befüllöffnung 6 aufweist. In Fahrtrichtung R hinten schleppt der Straßenfertiger 1 zudem eine Einbaubohle 7 nach, um das Einbaumaterial aus dem Materialbunker 5 zu einem Straßenbelag 8 zu verarbeiten.

Weiter ist in Figur 1 zu erkennen, dass dem Straßenfertiger 1 ein Lastkraftwagen 9 vorausfährt, der auf seiner Ladefläche 10 weiteres Einbaumaterial befördert, das zum Befüllen des Materialbunkers 5 des Straßenfertigers 1 vorgesehen ist. D. h., dass der Lastkraftwagen 9 als externe Versorgungseinheit für den Straßenfertiger 1 vorgesehen ist und diesen während der Einbaufahrt mit neuem Einbaumaterial versorgen soll.

In Figur 1 ist weiter eine Anordnung am Straßenfertiger 1 dargestellt, die eine Signalisierungseinrichtung 11, einen Außenspiegel 12 und einen Halter 13 umfasst. Der Halter 13 dient der gemeinsamen Befestigung der Signalisierungseinrichtung 11 und des Außenspiegels 12 an dem Fahrerschutzdach des Straßenfertigers 1.

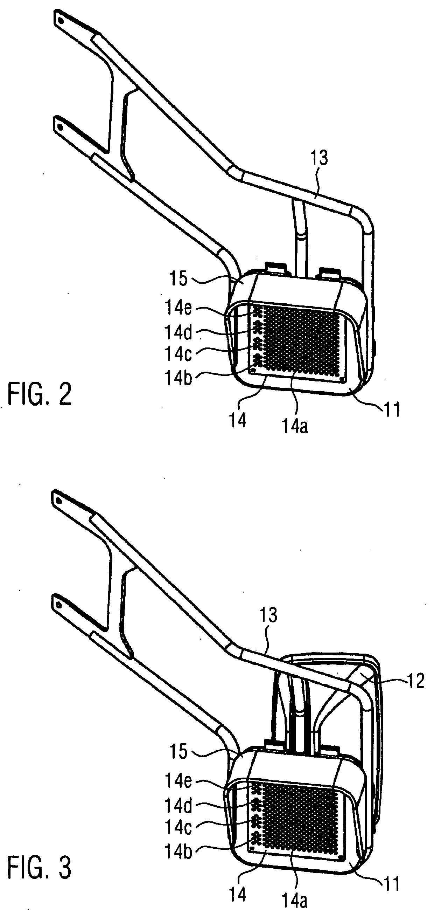

Besonders deutlich ist die an dem Halter 13 befestigte Signalisierungseinrichtung 11 in Figur 2 zu erkennen, die eine perspektivische Ansicht der an dem Halter 13 befestigten Signalisierungseinrichtung 11 darstellt. Es ist deutlich zu sehen, dass die Signalisierungseinrichtung 11 über ein Anzeigefeld 14 verfügt, das der Anzeige von Fahrkommandos für den Fahrzeuglenker des Lastkraftwagens 9 dient sowie Informationen zur Fahrt des Straßenfertigers 1 anzeigt. In diesem Beispiel ist das Anzeigefeld 14 in mehrere Teilfelder 14a bis 14e aufgeteilt. Dabei zeigen die Teilfelder 14b bis 14e dem Fahrzeuglenker des Lastkraftwagens 9 an, dass der Straßenfertiger im Moment selbst fährt. D. h., sobald der Straßenfertiger 1 fährt, erfolgt eine entsprechende Anzeige in den Teilfeldern 14b bis 14e.

Die Teilfelder 14a bis 14e des Anzeigefelds 14 sind dabei jeweils als LED-Felder ausgeführt, die eine besonders kontrastreiche Darstellung von unterschiedlichen Symbolen in hoher Auflösung und unterschiedlichen Farben gewährleisten. Weiterhin ist in Figur 2 gut zu erkennen, dass die Signalisierungseinrichtung 11 über einen Gehäuseteil 15 verfügt, der über das Anzeigefeld 14 hervorsteht und dieses vor übermäßiger Lichteinstrahlung schützt. Somit ist es auch bei direkter Sonneneinstrahlung möglich, eine gute Ablesbarkeit des Anzeigefelds 14 zu gewährleisten.

Figur 3 zeigt eine perspektivische Ansicht der Signalisierungseinrichtung 11 und des Halters 13 aus Figur 2, wobei an dem Halter 13 nun zusätzlich der Außenspiegel 12 des Straßenfertigers 1 befestigt ist. Gut zu erkennen ist, dass die Signalisierungseinrichtung 11 und der Außenspiegel 12 an jeweils unterschiedlichen Seiten des Halters 13 angeordnet und dort befestigt sind. Somit muss nur eine einzige Befestigungsmöglichkeit für den Halter 13 an dem Straßenfertiger 1 vorgesehen sein, um damit gleichzeitig die Signalisierungseinrichtung 11 und den Außenspiegel 12 an den Straßenfertiger 1 zu befestigen. Der Außenspiegel 12 und/oder die Signalisierungseinrichtung 11 sind dabei jeweils so an dem Halter 13 angebracht, dass sie sich je nach Fahrerwunsch ausrichten bzw. schwenken lassen.

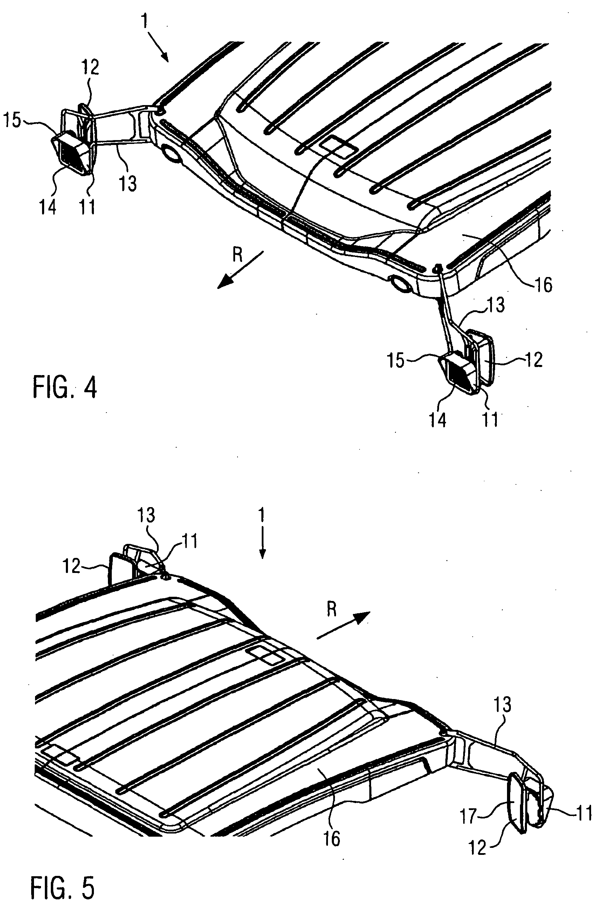

Figur 4 zeigt die Anordnung der Signalisierungseinrichtung 11, des Außenspiegels 12 und des Halters 13 aus Figur 3 befestigt an einem Fahrerschutzdach 16 des Straßenfertigers 1. Besonders gut ist zu erkennen, dass die Signalisierungseinrichtung 11 in Fahrtrichtung R nach vorne, d. h. in Richtung des dem Straßenfertigers 1 vorausfahrenden Lastkraftwagens 9 ausgerichtet ist. Dementsprechend sind die reflektierenden Flächen 17 des Außenspiegels 12 in Fahrtrichtung R des Straßenfertigers 1 nach hinten ausgerichtet, um dem Fahrzeuglenker des Straßenfertigers 1 eine gute Sicht nach hinten zu bieten. Um die Fahrsicherheit für den Straßenfertiger 1 und den Lastkraftwagen 9 dabei weiter zu erhöhen, ist jeweils eine Anordnung aus Signalisierungseinrichtung 11, Außenspiegel 12 und Halter 13 auf der linken und der rechten Seite des Fahrerschutzdaches 16 des Straßenfertigers 1 befestigt.

Figur 5 zeigt die aus Figur 4 bekannte Anordnung an dem Fahrerschutzdach 16 in einer perspektivischen Rückansicht. Dabei sind die reflektierenden Flächen 17 des Außenspiegels 12 bzw. deren Ausrichtung gut zu erkennen.

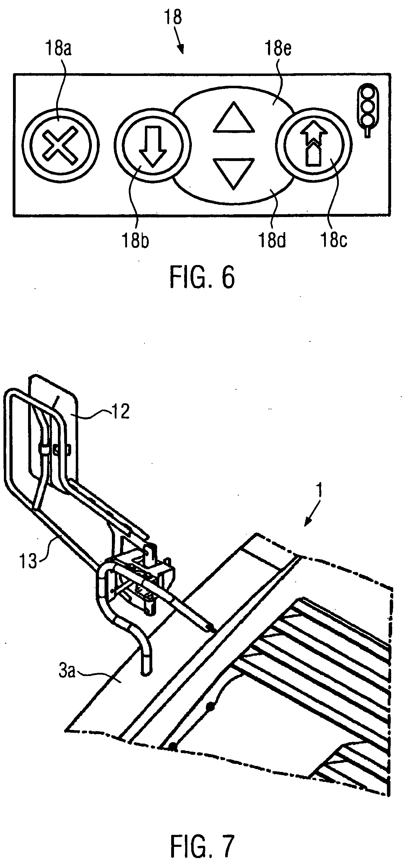

Figur 6 zeigt eine schematische Ansicht eines Bedienpults 18, das für die Ansteuerung des Anzeigefelds 14 der Signalisierungseinrichtung 11 vorgesehen ist. Hierfür verfügt das Bedienpult 18 über eine Vielzahl von Bedienungstasten 18a bis 18e, deren Betätigung jeweils ein entsprechendes Symbol im Anzeigefeld 14 bzw. dem Teilfeld 14 a erzeugt. Damit ist es dem Fahrzeuglenker des Straßenfertigers 1 durch Betätigung des Bedienpults 18 möglich, dem Fahrzeuglenker des Lastkraftwagens 9 ein für die Materialbefüllung benötigtes Fahrkommando als leicht zu erkennendes Symbol zu signalisieren. Beispielsweise erzeugt die Betätigung der Bedientaste 18a ein in roter Farbe dargestelltes "X", das für den Fahrzeuglenker des Lastkraftwagens 9 "Stopp" bedeuten soll. Anders signalisiert ein durch Drücken der Bedientaste 18b im Anzeigefeld 14 a dargestellter grüner Pfeil dem Fahrzeuglenker des Lastkraftwagens 9, dass dieser rückwärts an den Materialbunker 5 des Straßenfertigers 1 heranfahren soll. Auch die übrigen, in gut erkennbaren Farben auf dem Anzeigefeld 14a der Signalisierungseinrichtung 11 erzeugten Symbole sind jeweils eindeutig als spezifisches Fahrkommando von dem Fahrzeuglenker des Lastkraftwagens 9 erkennbar. Aufgrund der kontrastreichen Darestellung sind diese ebenfalls gut voneinander unterscheidbar.

Ausgehend vom dem dargestellten Ausführungsbeispiel kann die erfindungsgemäße Baumaschine 1 in vielfacher Hinsicht abgewandelt werden.

In einer in Figur 7 beispielhaft dargestellten Variante Welche nicht Teil der Erfindung ist, kann der Halter 13 für den Außenspiegel 12 und/oder die Signalisierungseinrichtung 11 auch auf der Abdeckung 3a, also der Motorhaube des Straßenfertigers 1, befestigt sein. Dies ist besonders dann vorteilhaft, wenn der Straßenfertiger 1 ohne das Fahrerschutzdach 16 gebaut bzw. ausgeliefert werden soll.

Des Weiteren können die von der Signalisierungseinrichtung 11 dargestellten Symbole zusätzlich zu dem vom Fahrzeuglenker des Straßenfertigers 1 bedienten Bedienpult 18 auch von einer Vielzahl von Sensoren, beispielsweise Abstandssensoren angesteuert bzw. erzeugt werden. Dabei werden die Eingaben über das Bedienpult 18 jedoch so priorisiert, dass jederzeit eine Eingriffsmöglichkeit bezüglich der im Anzeigefeld 14 der Signalisierungseinrichtung 11 dargestellten Symbole durch den Fahrzeuglenker des Straßenfertigers 1 besteht.

## Patentansprüche

1. Selbstfahrende Baumaschine (1), wobei die Baumaschine (1) ein Straßenfertiger oder Beschicker ist mit einem Antrieb (3), einer den Antrieb (3) abdeckenden Abdeckung (3a), einem Bedienstand (2) und einem von einer externen Versorgungseinheit (9) mit Material befüllbaren, eine Befüllöffnung (6) aufweisenden Materialbunker (5), wobei an der Baumaschine (1) eine Signalisierungseinrichtung (11) zum Signalisieren von Parametern der Materialbefüllung zu der externen Versorgungseinheit (9) vorgesehen ist,
**dadurch gekennzeichnet,**
**dass** die Baumaschine (1) weiter über wenigstens einen Außenspiegel (12) verfügt, dass der wenigstens eine Außenspiegel (12) und die Signalisierungseinrichtung (11) mittels eines gemeinsamen Halters (13) an der Baumaschine (1) befestigt sind, und dass der Halter (13) an einem Fahrerschutzdach (16) der Baumaschine (1) befestigt ist.

2. Baumaschine nach Anspruch 1, **dadurch gekennzeichnet, dass** der Außenspiegel (12) ein Rückspiegel ist, und die Signalisierungseinrichtung (11) und der Außenspiegel (12) auf unterschiedlichen Seiten des Halters (13) angeordnet sind.

3. Baumaschine nach Anspruch 1 oder 2, **dadurch gekennzeichnet, dass** die Signalisierungseinrichtung (11) ein Anzeigefeld (14) aufweist, das von einem Bedienpult (18) der Baumaschine (1) aus ansteuerbar ist.

4. Baumaschine nach Anspruch 3, **dadurch gekennzeichnet, dass** das Anzeigefeld (14) wenigstens ein LED-Leuchtfeld (14a bis 14e) aufweist, mit dem unterschiedliche Symbole darstellbar sind.

5. Baumaschine nach einem der vorangehenden Ansprüche, **dadurch gekennzeichnet, dass** die Anzeige der Signalisierungseinrichtung (11) in Abhängigkeit von Parametern ansteuerbar ist, die mittels wenigstens eines Sensors der Baumaschine (1) ermittelt werden.

6. Baumaschine nach einem der vorangehenden Ansprüche, **dadurch gekennzeichnet, dass** die Ausrichtung des Außenspiegels (12) und/oder der Signalisierungseinrichtung (11) einstellbar ist.

7. Baumaschine nach einem der vorangehenden Ansprüche, **dadurch gekennzeichnet, dass** jeweils ein Halter (13) für die linke und die rechte Seite der Baumaschine (1) vorgesehen ist und an jedem der Halter (13) eine Signalisierungseinrichtung (11) befestigt ist.

8. Baumaschine nach einem der Ansprüche 3 oder 4, **dadurch gekennzeichnet, dass** die Signalisierungseinrichtung (11) einen über das Anzeigefeld (14) hervorstehenden Gehäuseteil (15) aufweist, um die Lesbarkeit des Anzeigefelds (14) zu erhöhen.

## Claims

1. Self propelled building machine (1), wherein the building machine (1) is a road finisher or charger comprising a drive (3), a cover (3a) covering the drive (3), a control platform (2) and a material hopper (5) which includes a filling hole (6) and can be filled with material by an external supply unit (9), the building machine (1) being provided with a signaling device (11) for signaling material filling parameters to the external supply unit (9),
**characterized in that**
the building machine (1) further comprises at least one external mirror (12), the at least one external mirror (12) and the signaling device (11) are attached to the building machine (1) by means of a common holder (13), and the holder (13) is attached to an overhead guard (16) of the building machine (1).

2. Building machine according to claim 1, **characterized in that** the external mirror (12) is a rear-view mirror, and the signaling device (11) and the rear-view mirror (12) are arranged on different sides of the holder (13).

3. Building machine according to claim 1 or 2, **characterized in that** the signaling device (11) comprises a display panel (14) which can be controlled from an operating console (18) of the building machine (1).

4. Building machine according to one of the preceding claims, **characterized in that** the display panel (14) comprises at least one LED light-display panel (14a to 14e) by means of which different symbols can be displayed.

5. Building machine according to one of the preceding claims, **characterized in that** the display of the signaling device (11) can be controlled on the basis of parameters which are determined by means of at least one sensor of the building machine (1).

6. Building machine according to one of the preceding claims, **characterized in that** the orientation of the external mirror (12) and/or the signaling device (11) is adjustable.

7. Building machine according to one of the preceding claims, **characterized in that** a holder (13) is respectively provided for the left and the right side of the building machine (1), and a signaling device (11) is provided on each of the holders (13).

8. Building machine according to one of claims 3 or 4, **characterized in that** the signaling device (11) comprises a housing part (15) which projects over the display panel (14) to increase the readability of the display panel (14).

## Revendications

1. Engin de travaux publics automoteur (1), l'engin de travaux publics (1) étant un finisseur de route ou un alimentateur et comprenant un entraînement (3), un capotage de recouvrement (3a) recouvrant l'entraînement (3), un poste de conduite (2) et une trémie de matériau (5), qui peut être remplie de matériau par une unité d'alimentation externe (9) et présente une ouverture de remplissage (6), un dispositif de signalisation (11) étant prévu sur l'engin de travaux publics (1), pour signaler des paramètres de remplissage de matériau à l'unité d'alimentation externe (9),
**caractérisé**
**en ce que** l'engin de travaux publics (1) dispose en outre d'au moins un miroir extérieur (12), en ce que ledit au moins un miroir extérieur (12) et le dispositif de signalisation (11) sont fixés à l'engin de travaux publics (1) au moyen d'un support (13) commun, et en ce que le support (13) est fixé à un toit de protection de conducteur (16) de l'engin de travaux publics (1).

2. Engin de travaux publics selon la revendication 1, **caractérisé en ce que** le miroir extérieur (12) est un rétroviseur, et le dispositif de signalisation (11) et le miroir extérieur (12) sont agencés sur des côtés différents du support (13).

3. Engin de travaux publics selon la revendication 1 ou la revendication 2, **caractérisé en ce que** le dispositif de signalisation (11) présente un champ de visualisation (14) qui peut être commandé à partir d'un pupitre de commande (18) de l'engin de travaux publics (1).

4. Engin de travaux publics selon la revendication 3, **caractérisé en ce que** le champ de visualisation (14) présente au moins un champ luminescent à LED (14a à 14e), à l'aide duquel peuvent être représentés différents symboles.

5. Engin de travaux publics selon l'une des revendications précédentes, **caractérisé en ce que** l'affichage de visualisation du dispositif de signalisation (11) peut être commandé en fonction de paramètres, qui sont déterminés à l'aide d'au moins un capteur de l'engin de travaux publics (1).

6. Engin de travaux publics selon l'une des revendications précédentes, **caractérisé en ce que** l'orientation du miroir extérieur (12) et/ou du dispositif de signalisation (11) peut être réglée.

7. Engin de travaux publics selon l'une des revendications précédentes, **caractérisé en ce qu'**il est prévu respectivement un support (13) pour le côté gauche et le côté droit de l'engin de travaux publics (1), et un dispositif de signalisation (11) est fixé sur chacun des supports (13).

8. Engin de travaux publics selon l'une des revendications 3 ou 4, **caractérisé en ce que** le dispositif de signalisation (11) comporte une partie de boitier (15) dépassant du champ de visualisation (14), en vue d'améliorer la lisibilité du champ de visualisation (14).
